# EUROPÄISCHE PATENTSCHRIFT

(11) **EP 0 984 872 B1**
(45) Veröffentlichungstag und Bekanntmachung des Hinweises auf die Patenterteilung: **17.10.2001**
(21) Anmeldenummer: 98928143.1
(22) Anmeldetag: 03.04.1998
(51) Int. Cl.: B60N 2/44, A47C 1/024

(54) **RÜCKENLEHNENTRÄGER FÜR EINE RÜCKENLEHNE EINES SITZES, INSBESONDERE EINES FAHRZEUGSITZES**
SUPPORT FOR THE BACK OF A SEAT, SPECIALLY AN AUTOMOBILE SEAT
SUPPORT POUR DOSSIER DE SIEGE, NOTAMMENT D'UN SIEGE DE VEHICULE

(30) Priorität: 07.06.1997 DE 19724163
(43) Veröffentlichungstag der Anmeldung: 15.03.2000
(73) Patentinhaber: GRAMMER AG, 92224 Amberg (DE)
(72) Erfinder: MEILLER, Hermann, D-92533 Wernberg-Köblitz (DE); OTT, Richard, D-92245 Kümmersbruck (DE)
(74) Vertreter: LOUIS, PÖHLAU, LOHRENTZ & SEGETH
(86) Internationale Anmeldenummer: DE9800968
(87) Internationale Veröffentlichungsnummer: WO9856611

(56) Entgegenhaltungen:
- WO-A-87/06810
- DE-A- 3 319 252
- DE-A- 3 901 379
- DE-A- 4 410 681
- DE-A- 4 410 713
- US-A- 3 697 133
- US-A- 4 595 238
- US-A- 5 348 375

## Beschreibung

Die Erfindung betrifft einen Rückenlehnenträger für eine Rückenlehne eines Sitzes, insbesondere eines Fahrzeugsitzes, der einen plattenförmigen Abschnitt zur Abstützung des Rückens eines Benutzers aufweist und zur Verstellung der Neigung der Rückenlehne um eine Schwenkachse verschwenkbar ist, wobei der Rückenlehnenträger einen am unteren Ende des plattenförmigen Abschnitts angeordneten, um die Schwenkachse herum in Form eines halben Rohres ausgebildeten Abschnitt (12) aufweist.

Bei Bürositzen ist im allgemeinen der plattenförmige Abschnitt zur Abstützung des Rückens des Benutzers in einem U-förmigen Rahmen integriert, dessen über den plattenförmigen Abschnitt zur Abstützung des Rückens des Benutzers vorstehenden parallelen Schenkel um die Schwenkachse verschwenkbar sind. Hierbei müssen insbesondere Vorkehrungen zur Versteifung des Rückenlehnenträgers parallel zur Schwenkachse getroffen werden, so daß bei einer Verstellung der Neigung des Rückenlehnenträgers auf einer Seite, d. h. an einem der parallelen Schenkel des U-förmigen Rahmens, das Drehmoment in ausreichender Stärke auch auf die andere Seite des Rückenlehnenträgers, d. h. auf den anderen parallelen Schenkel des U-förmigen Rahmens, in ausreichendem Maße übertragen wird.

Diese Vorkehrungen, die von vielfältiger Art sein können, machen den Sitz wegen der Montagekosten und des Materialaufwandes teuer.

Ein Rückenlehnenträger gemäß dem Oberbegriff des Anspruchs 1 ist aus der US-A-4,595,238 bekannt.

Bei diesem Rückenlehnenträger ist der halbrohrförmige Abschnitt mit dem plattenförmigen Abschnitt des Rückenlehnenträgers innerhalb dieses Trägers verschweißt.

Diese Herstellung macht den Sitz ebenfalls teuer. Außerdem läßt die Verwindungssteifigkeit entlang der Schwenkachse zu wünschen übrig.

Der Erfindung liegt daher die Aufgabe zugrunde, einen Rückenlehnenträger der eingangs genannten Art so auszubilden, daß seine Herstellung billiger und die Verwindungssteifigkeit entlang der Schwenkachse erhöht und gleichzeitig die Steifigkeit des plattenförmigen Abschnitts an der Trennstelle zur halbrohrförmigen Ausbildung verbessert wird.

Diese Aufgabe wird erfindungsgemäß dadurch gelöst, daß der halbrohrförmige Abschnitt einstückig mit dem plattenförmigen Abschnitt ausgebildet ist, wobei die obere Längskante des halbrohrförmigen Abschnitts gleichzeitig die untere Kante des plattenförmigen Abschnitts bildet, und daß in einer Ansicht senkrecht auf den plattenförmigen Abschnitt der halbrohrförmige Abschnitt linsenförmig ausgebildet ist derart, daß die beiden Längskanten des halben Rohres symmetrisch zur Schwenkachse gekrümmt sind.

Die Einstückigkeit macht die Herstellung preiswert. Außerdem ist auf diese Weise sichergestellt, daß die Änderung des Drehmomentes beim Verschwenken des Rückenlehnenträgers gleichmäßig entlang der Schwenkachse von einer Seite auf die andere Seite übertragen wird, wodurch die Verwindungssteifheit entlang der Schwenkachse gegeben ist, so daß hierfür keine besonderen Vorkehrungen mehr getroffen werden müssen. Gleichzeitig ist bei der erfindungsgemäßen Ausbildung die Verwindungssteifigkeit entlang der Schwenkachse erhöht und gleichzeitig die Steifigkeit des plattenförmigen Abschnitts an der Grenzstelle zur halbrohrförmigen Ausbildung verbessert.

Vorteilhafterweise kann der den Rücken des Benutzers abstützende plattenförmige Abschnitt mit einem Krümmungsradius um eine senkrecht in einem Abstand zur Schwenkachse und parallel zur Mittelachse des Abschnitts verlaufende Achse gewölbt sein.

Diese Krümmung verbessert weiterhin die Steifigkeit um die Schwenkachse herum und macht insgesamt den Rückenlehnenträger steifer, so daß die Abstützkräfte von der rohrförmigen Ausbildung ausgehend senkrecht zur Schwenkachse bis zum oberen Ende des Rückenlehnenträgers besser übertragen werden.

Die Erfindung wird nun an einem Ausführungsbeispiel und anhand der beiliegenden Zeichnung näher erläutert. In der Zeichnung stellen dar:
- Fig. 1: schematisch eine perspektivische Ansicht des erfindungsgemäßen Rückenlehnenträgers und
- Fig. 2: eine Draufsicht auf den erfindungsgemäßen Rückenlehnenträger.

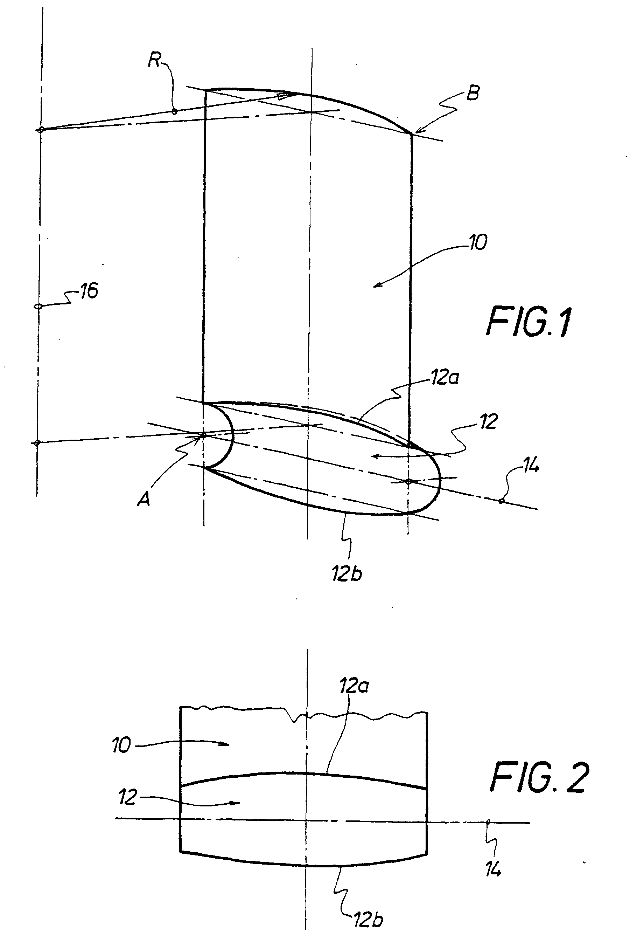

Der in den Figuren 1 und 2 dargestellte Rückenlehnenträger ist einstückig, bspw. aus Metall. Er kann aber auch aus Kunststoff bestehen.

Der erfindungsgemäße Rückenlehnenträger weist - wie aus Fig. 1 ersichtlich ist - einen im wesentlichen plattenförmigen Abschnitt 10 zur Abstützung des Rückens des Benutzers auf, an dem sich ein halbrohrförmiger Abschnitt 12 anschließt. Der Abschnitt 12 ist um eine Schwenkachse 14 des Rückenlehnenträgers herum halbrohrförmig ausgebildet, wie gezeigt. In einer Ansicht senkrecht zum plattenförmigen Abschnitt 10 des Rückenlehnenträgers und damit senkrecht zur Schwenkachse 14 hat der Abschnitt 12 einen linsenförmigen Umriß mit abgeschnittenen Seitenkanten, wie es unten in Fig. 2 dargestellt ist, wobei die Längskanten 12a und 12b des rohrförmigen Abschnitts 12 symmetrisch zur Schwenkachse 14, wie gezeigt, gekrümmt verlaufen.

Außerdem kann der plattenförmige Abschnitt 10 des Rückenlehnenträgers gewölbt sein, wobei die Achse 16 des Krümmungsradius R der Wölbung senkrecht in einem Abstand zur Schwenkachse 14 verläuft. Dadurch können die Längskanten 12a und 12b sowohl in der Zeichenblattebene als auch in einer dazu senkrechten Ebene gekrümmt verlaufen.

Durch eine derartige Ausbildung wird eine bei A eingeleitete Drehkraft zuverlässig auf den Punkt B bei einer einstückigen Ausbildung des Rückenlehnenträgers übertragen.

## Patentansprüche

1. Rückenlehnenträger für eine Rückenlehne eines Sitzes, insbesondere eines Fahrzeugsitzes, der einen plattenförmigen Abschnitt (10) zur Abstützung des Rückens eines Benutzers aufweist und zur Verstellung der Neigung der Rückenlehne um eine Schwenkachse (14) verschwenkbar ist, wobei der Rückenlehnenträger einen am unteren Ende des plattenförmigen Abschnitts (10) angeordneten, um die Schwenkachse herum in Form eines halben Rohres ausgebildeten Abschnitt (12) aufweist,
**dadurch gekennzeichnet,**
**daß** der halbrohrförmige Abschnitt (12) einstückig mit dem plattenförmigen Abschnitt (10) ausgebildet ist, wobei die obere Längskante (12a) des halbrohrförmigen Abschnitts (12) gleichzeitig die untere Kante des plattenförmigen Abschnitts (10) bildet, und daß in einer Ansicht senkrecht auf den plattenförmigen Abschnitt (10) der halbrohrförmige Abschnitt (12) linsenförmig ausgebildet ist derart, daß die beiden Längskanten (12a, 12b) des halben Rohres symmetrisch zur Schwenkachse (14) gekrümmt sind.

2. Rückenlehnenträger nach Anspruch 1,
**dadurch gekennzeichnet,**
**daß** der den Rücken des Benutzers abstützende plattenförmige Abschnitt (10) mit einem Krümmungsradius (R) um eine senkrecht in einem Abstand zur Schwenkachse (14) und parallel zur Mittelachse des Abschnitts (10) verlaufende Achse (16) gewölbt ist.

## Claims

1. Backrest support for a backrest of a seat, in particular a vehicle seat, which has a panel-shaped section (10) for supporting the back of a user and, for adjustment of the inclination of the backrest, can be pivoted about a pivot axis (14), where the backrest support has a section (12) which is arranged at the lower end of the panel-shaped section (10) and is designed around the pivot axis in the form of a semi-tube, **characterized in that** the semi-tubular section (12) is formed integrally with the panel-shaped section (10), in which case the upper longitudinal edge (12a) of the semi-tubular section (12) at the same time forms the lower edge of the panel-shaped section (10), and **in that**, in a view vertically onto the panel-shaped section (10), the semi-tubular section (12) is designed lenticularly such that the two longitudinal edges (12a, 12b) of the semi-tube are curved symmetrically with respect to the pivot axis (14).

2. Backrest support according to Claim 1, **characterized in that** the panel-shaped section (10) which supports the back of the user is arched with a radius of curvature (R) about an axis (16) which runs perpendicularly at a distance from the pivot axis (14) and parallel to the central axis of the section (10).

## Revendications

1. Support de dossier, destiné au dossier d'un siège, en particulier d'un siège pour véhicule, du type comportant une portion en forme de plaque (10) pour l'appui du dos d'un utilisateur et qui est basculable autour d'un axe de basculement (14) en vue du réglage de l'inclinaison du dossier, dans lequel le support de dossier comporte une portion (12) réalisée en forme de demi tube, disposée autour de l'axe de basculement à l'extrémité inférieure de la portion en forme de plaque (10), **caractérisé en ce que** la portion en forme de demi tube (12) est réalisée en une seule pièce avec la portion en forme de plaque (10), le bord longitudinal supérieur (12a) de la portion en forme de demi tube (12) constituant en même temps le bord inférieur de la portion en forme de plaque (10), et **en ce que** la portion en forme de demi tube (12), en position verticale sur la portion en forme de plaque (10), est réalisée en forme de lentille, de manière telle que les deux bords longitudinaux (12a et 12b) du demi tube soient recourbés symétriquement par rapport à l'axe de basculement.

2. Support de dossier selon la revendication 1, **caractérisé en ce que** la portion en forme de plaque (10) sur laquelle appuie le dos de l'utilisateur, est galbée suivant un rayon de courbure R autour d'un axe parallèle à l'axe médian de la portion (10) et verticale à une certaine distance de l'axe de basculement (14).
